Europäisches Patentamt

**European Patent Office**

Office européen des brevets

(11) Numéro de publication: **0 236 234**
**B1**

(12) **FASCICULE DE BREVET EUROPEEN**

(45) Date de publication du fascicule du brevet:
06.06.90

(21) Numéro de dépôt: 87400468.2

(22) Date de dépôt: 04.03.87

(51) Int. Cl.⁵: **A47C 1/024,** F16F 9/02

(54) **Dispositif élastique blocable formant bras de longueur variable.**

(30) Priorité: 05.03.86 FR 8603071

(43) Date de publication de la demande:
09.09.87 Bulletin 87/37

(45) Mention de la délivrance du brevet:
06.06.90 Bulletin 90/23

(84) Etats contractants désignés:
CH DE ES GB IT LI NL

(56) Documents cités:
DE-A- 1 650 634

(73) Titulaire: EUROSIT, Zone Industrielle St-Eloi,
F-58008 Nevers(FR)

(72) Inventeur: Gaymard, Jean Pierre, Les Linans Cuffy,
F-18150 La Guerche(FR)

(74) Mandataire: CABINET BONNET-THIRION, 95 Boulevard
Beaumarchais, F-75003 Paris(FR)

# Description

L'invention se rapporte à un dispositif élastique blocable formant bras de longueur variable, incorporant en particulier un "ressort pneumatique" en forme générale de vérin, connu en soi, susceptible d'être bloqué en un point quelconque de sa course.

L'invention concerne plus particulièrement un agencement permettant de commander une valve dudit ressort pneumatique autorisant la manœuvre du vérin formant ressort, par le jeu d'une force s'exerçant directement axialement sur celui-ci, ladite force étant exercée contre celle développée par un autre ressort, de façon à simplifier le système de commande de ladite valve.

L'invention s'applique tout particulièrement à un mécanisme de siège à dossier d'inclinaison réglable et permet, entre autres, de simplifier les manœuvres de réglage d'un tel siège.

On connaît (par exemple du DE-A 1 650 634) un système mécanique, notamment pour l'articulation d'un siège à assise et/ou dossier d'inclinaison réglable, muni d'un bras de longueur ajustable, articulé à ses extrémités et comprenant entre autres un ressort pneumatique (ou hydro-pneumatique) en forme de vérin comportant un piston muni d'une valve intégrée dont la fermeture permet de bloquer ledit ressort dans n'importe quelle position choisie. Plus précisément, un tel "ressort" comporte un piston mobile à l'intérieur d'un corps de vérin et lié à une tige dudit vérin faisant saillie axialement du corps de vérin. La valve est agencée dans le piston pour établir la communication entre deux chambres définies dans ledit corps de part et d'autre du piston et une tige d'actionnement de cette valve est logée dans un alésage axial de la tige de vérin et fait saillie à l'extrémité de celle-ci. Classiquement, la tige de valve est actionnée par un mécanisme formant levier. Dans le cas d'un siège, ce mécanisme est situé sous l'assise, ce qui oblige l'utilisateur à quelques contorsions lorsqu'il se trouve sur le siège et qu'il désire modifier l'inclinaison du dossier.

L'invention permet de résoudre cet inconvénient dans la mesure où le déclenchement de l'ouverture de la valve s'opère par une force transmise axialement au ressort pneumatique. Ceci permet à l'utilisateur, toujours dans le cas d'un siège, de commander le mécanisme en donnant avec le dos de simples impulsions au dossier, utilisé en tant que levier.

Dans cet esprit, l'invention concerne donc essentiellement un dispositif élastique blocable formant bras de longueur variable destiné à être monté entre deux points d'ancrage, d'écartement variable, d'un mécanisme tel que par exemple un mécanisme de siège, du type comportant un ressort pneumatique ou hydro-pneumatique, muni d'un piston mobile à l'intérieur d'un corps de vérin et lié à une tige dudit vérin faisant saillie axialement dudit corps de vérin, une valve faisant saillie axialement dudit corps de vérin, une valve agencée dans ledit piston pour établir la communication entre deux chambres définies dans ledit corps de part et d'autre dudit piston et une tige de manœuvre de cette valve, logée dans un alésage axial de ladite tige de vérin et faisant saillie à l'extrémité de celle-ci, caractérisé en ce que ladite tige de vérin est fixée à un équipage mobile monté à l'intérieur d'un corps creux abritant des moyens élastiques couplés audit équipage mobile, en ce que ledit équipage mobile coopère avec des moyens de butée limitant sa course axiale à l'intérieur dudit corps creux et en ce que l'extrémité de ladite tige de manœuvre débouche dans une cavité dudit équipage mobile dans laquelle est agencée une butée fixe en translation par rapport audit corps creux, éventuellement réglable et/ou effaçable, placée en regard de ladite extrémité de tige de manœuvre.

Si le dispositif est équipé d'un ressort pneumatique conforme à la définition qui précède, le bras de longueur variable conserve encore une certaine élasticité lorsque la valve est fermée. En revanche, s'il s'agit d'un ressort hydro-pneumatique où le piston se déplace dans un alésage rempli d'un liquide incompressible (dispositif également connu dans la technique sous le nom de "ressort oléo-pneumatique" parce que le liquide en question est de l'huile) le bras se comporte comme une liaison rigide lorsque la valve est fermée.

A l'ouverture de la valve, le ressort pneumatique se détend lentement par le simple effet de la pression du fluide qui s'exerce sur le piston et ouvre la valve, le fluide qui passe d'une chambre à l'autre étant laminé au travers d'un orifice calibré, en série avec la valve. En conséquence, le bras de longueur variable incluant ledit ressort pneumatique s'allonge progressivement, ce qui correspond par exemple, à basculement vers l'avant du dossier de siège. Ce basculement est donc suffisamment bien contrôlé pour ne jamais frapper le dos de l'utilisateur. En revanche, une force d'appui normal (endessous d'un certain seuil) exercée par le dos de l'utilisateur sur le dossier, suffit à maintenir la valve fermée et donc, à assurer la stabilité du dossier dans la position choisie.

L'invention sera mieux comprise et d'autres avantages de celle-ci apparaîtront clairement à lumière de la description qui va suivre d'un dispositif élastique blocable formant bras de longueur variable conforme à son principe, donnée uniquement à titre d'exemple et faite en référence aux dessins annexés dans lesquels:

- la figure 1 est une vue en coupe partielle du dispositif conforme à l'invention;
- la figure 2 est une vue suivant la flèche II de la figure 1; et
- la figure 3 est une vue partielle d'une variante utilisant un ressort hydro-pneumatique.

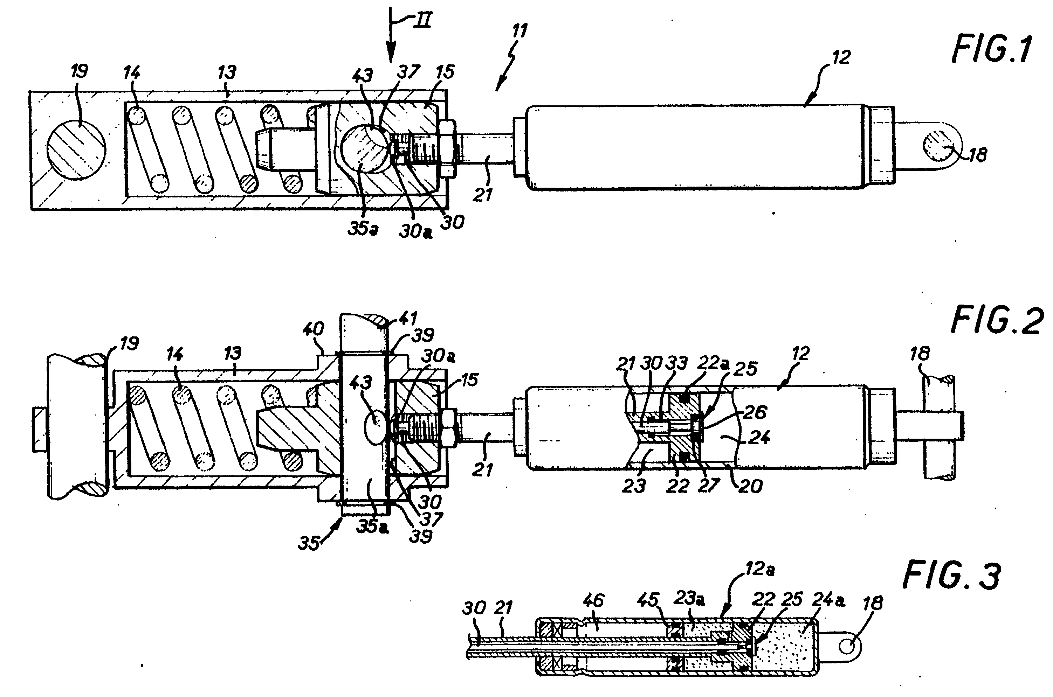

En se reportant aux dessins, on a représenté un dispositif élastique blocable 11 formant bras de longueur réglable et essentiellement constitué de l'assemblage, bout à bout, d'un ressort pneumatique 12 (ou hydro-pneumatique 12a, voir figure 3) connu en soi, et d'un corps creux 13 cylindrique abritant des moyens élastiques comme par exemple un ressort hélicoïdal 14 travaillant en compression et un équipage mobile 15 se déplaçant à l'intérieur du corps creux 13, l'équipage mobile étant monté à une extrémité dudit ressort pneumatique, en forme générale de vérin. L'ensemble est destiné à être monté avec articulation entre deux points d'ancrage d'écartement variable, symbolisés sur les dessins par deux arbres 18 et 19. L'arbre 18 peut par exemple être solidaire d'un dossier pivotant de siège, tandis que l'arbre 19 peut être solidaire d'une embase du même siège.

Dans toute la suite de la description, on supposera que le mécanisme du siège est tel qu'un basculement en arrière du dossier provoque un rapprochement des deux arbres 18 et 19.

Le ressort pneumatique 12 en forme de vérin, du type à une seule tige 21, comporte classiquement un corps de vérin 20 abritant un piston 22 solidaire de l'extrémité interne de la tige de vérin 21. Cette dernière fait saillie axialement du corps dudit vérin. Le coulissement du piston 22 à l'intérieur du corps de vérin 20 est rendu étanche par un joint annulaire 22a. Le piston partage l'intérieur du corps de vérin en deux chambres 23 et 24. La chambre 23 abrite la tige de vérin 21. Une valve 25 est agencée dans le piston. Elle se compose essentiellement d'un clapet 26 en appui contre un siège annulaire étanche 27. Le clapet 25 est solidaire d'une tige d'actionnement 30 de ladite valve, logée dans un alésage axiale de la tige de vérin 21 et faisant saillie à l'extrémité de celle-ci. Lorsque le clapet est ouvert, le fluide (ici de l'air), emprisonné dans le ressort pneumatique, peut passer d'une chambre à l'autre suivant le sens de la sollicitation appliquée axialement au dispositif. Le passage de fluide s'effectue d'une part, le long de ladite tige d'actionnement dans l'alésage qui l'abrite et, d'autre part, au travers d'un orifice 33 de faible section prédéterminée, opérant une résistance notable à l'écoulement du fluide passant d'une chambre à l'autre, d'où il résulte une vitesse limitée de la variation de longueur du dispositif, dont l'intérêt sera expliqué plus loin.

Selon l'invention, la tige de vérin 21 est fixée à l'équipage mobile 15 tandis que les moyens élastiques (c'est-à-dire ici le ressort 14) sont comprimés entre une paroi de fond dudit corps creux 13 et une extrémité de l'équipage mobile 15. En outre, ce dernier est limité dans sa course axiale, à l'intérieur du corps creux 13 par des moyens de butée 35 tandis que la tige de manœuvre 30 débouche dans une cavité 37 définie dans l'équipage mobile. Une butée fixe placée en regard de l'extrémité 30a de la tige 30 est agencée dans la cavité 37. Selon l'exemple, les moyens de butée 35 sont combinés à la butée fixe agencée dans la cavité 37. Pour cela lesdits moyens de butée comportent une tige transversale 35a montée diamétralement dans le corps creux cylindrique 13 et cette tige 35a traverse la cavité 37 qui a la forme d'un trou oblong s'étendant diamétralement dans l'équipage mobile 15, cylindrique. La forme et les dimensions de la tige transversale 35a et du trou oblong définissant la course axiale de l'équipage mobile 15. Par conséquent, la tige transversale 35a constitue aussi la butée fixe précitée placée en regard de l'extrémité 30a de. la tige de manœuvre 30. Par ailleurs, la tige transversale 35a, cylindrique, est montée tourillonnante dans le corps creux. Elle est immobilisée en translation par deux circlips 39 montés dans des gorges annulaires pratiquées à sa surface externe et prenant appui contre des épaulements 40 définis à l'extérieur du corps creux 13. La tige 35a comporte aussi un prolongement de manœuvre 41 faisant saillie extérieurement au corps creux 13 de façon à pouvoir être reliée à un volant, bouton de commande ou analogue (non représenté). A l'intérieur de la cavité 37, la tige transversale 35a comporte une creusure latérale 43 dont la prfondeur est suffisante pour désolidariser l'extrémité 30a de la tige transversale 35a formant butée, pour toute position de l'équipage mobile 15 et lorsque ladite tige transversale est dans une position telle que la creusure 43 se trouve placée en regard de ladite extrémité 30a. Le positionnement latéral de la creusure est stabilisé par les circlips 39. Ainsi, se trouve défini, de façon simple, un agencement permettant un blocage total du dispositif, commandé manuellement par rotation de la tige 35a. Le trou oblong définissant la cavité 37 a sa plus grande largeur disposée dans le sens de sollicitation du ressort 14 et sa plus petite largeur, perpendiculaire, correspond au diamètre de la tige 35a. La différence entre la grande largeur du trou oblong et le diamètre de la tige est au moins étale à la course nécessaire au déclenchement de la valve 25.

Le fonctionnement - lorsque l'empreinte 43 n'est pas en regard de l'extrémité 30a de la tige de manœuvre - est le suivant:

La longueur et la force du ressort 14 sont suffisantes pour plaquer l'équipage mobile 15 contre la tige transversale 35a. Si une force axiale s'exerce sur le dispositif dans un sens tendant à réduire la distance entre les deux axes 18 et 19, cette force se traduit en premier lieu par une compression supplémentaire du ressort 14 sous l'effet du déplacement de l'équipage mobile 15, le ressort pneumatique 12 restant, dans un premier temps, rigide ou sensiblement rigide. Si la force exercée sur le dispositif dépasse un certain seuil, le déplacement de l'équipage mobile est suffisant pour provoquer l'actionnement de la tige de manœuvre 30 et donc l'ouverture de la valve 25. Le déblocage du ressort pneumatique 12 s'opère donc sans manœuvre particulière de l'utilisateur. La force nécessaire au déclenchement est directement fonction de la puissance du ressort 14. La précontrainte de ce ressort pourrait d'ailleurs facilement être rendue réglable, par exemple en prévoyant une paroi mobile à positionnement réglable entre la paroi de fond du corps creux 13 et l'extrémité correspondante du ressort 14. Cet agencement, non représenté, permettrait de faire varier le seuil de déclenchement du ressort pneumatique 12, au gré de l'utilisateur.

A partir de l'ouverture de la valve 25, la poursuite du mouvement se fait automatiquement par déplacement du piston 22 à l'intérieur du corps de vérin 20, moyennant un effort de manœuvre modéré et avec une vitesse limitée déterminée par la restriction d'écoulement définie par l'orifice 33. Pour l'application envisagée ci-dessus, le dossier bascule donc vers l'arrière. Le choix de cette vitesse de déplacement du piston 22 influe sur lě comportement du dispositif (et donc sur celui du siège associé). En effet, au fur et à mesure que le dossier bascule vers l'arrière, la pression dans le ressort pneumatique augmente et une force de rappel se crée, due à la différence de surface des faces actives du piston 22 dans les chambres 23 et 24. Si l'utilisateur relâche brusquement son effort sur le dossier, le ressort 14 plaque instantanément l'équipage mobile 15 contre la tige 35a et la valve 25 se ferme. Le dossier reste donc bloqué en position inclinée. Pour faire revenir le dossier en position avant, il suffit que l'utilisateur sollicite modérément le dossier avec son dos de façon à communiquer au dispositif une force suffisante pour maintenir la valve 25 ouverte contre l'action du ressort 14 et permettre ainsi au ressort pneumatique de s'allonger à nouveau sous l'effet de la pression qui règne dans le corps de vérin 20; la tige 21 ressortant lentement dudit corps de vérin en raison de l'effet de laminage exercé par l'orifice 33 sur le fluide passant de la chambre 24 à la chambre 23. Ceci évite donc tout retour en avant rapide du dossier susceptible de venir frapper, de façon désagréable, le dos de l'utilisateur.

Lorsque la tige 35a est déplacée pour que la creusure 43 vienne en regard de l'extrémité 30a, le ressort pneumatique est bloqué en permanence.

La figure 3 illustre une variante du dispositif dans laquelle le ressort pneumatique 12 des figures 1 et 2 est remplacé par un ressort hydro-pneumatique 12a, connue en soi. Le piston 22 et la valve 25 sont identiques au mode de réalisation précédent mais les chambres 23a et 24a sont remplies d'huile, c'est-à-dire d'un fluide incompressible. Un piston 45 coulissant de façon étanche entre la face interne du corps de vérin et la tige de vérin 21, sépare la chambre 23a d'une chambre 46 remplie d'un gaz. Le fonctionnement est comparable à ce qui est décrit plus haut avec, cette fois, une rigidité totale du dispositif, valve fermée, dans le sens de rentrée de la tige 21, dû à l'incompressibilité du fluide bloqué dans la chambre 24a.

Bien entendu, l'invention n'est pas limitée à la description qui précède mais comprend tous les équivalents techniques des moyens mis en jeu. Ainsi, on a représenté un dispositif muni d'un ressort hélicoïdal mécanique 14, mais ce ressort peut être remplacé par un équivalent pneumatique, si l'équipage mobile 15 coulisse de façon étanche à l'intérieur du corps 13 de façon à emprisonner dans celui-ci un gaz compressible. La combinaison des deux solutions, à ressort mécanique et pneumatique est bien entendu également possible.

L'invention n'est pas non plus limitée à un simple dispositif de longueur variable pour un mécanisme de siège. D'autres applications intéressantes peuvent être envisagées avec le même dispositif tel qu'il vient d'être décrit ci-dessus. En particulier, le dispositif peut être avantageusement utilisé en tant que système de levage d'un haillon arrière d'un véhicule automobile.

## Revendications

1. Dispositif élastique blocable formant bras de longueur variable destiné à être monté entre deux points d'ancrage (18, 19), d'écartement variable, d'un mécanisme tel que par exemple un mécanisme de siège, du type comportant un ressort pneumatique (12) ou hydro-pneumatique, muni d'un piston (22) mobile à l'intérieur d'un corps de vérin (20) et lié à une tige (21) dudit vérin faisant saillie axialement dudit corps de vérin, une valve (25) agencée dans ledit piston pour établir la communication entre deux chambres (23, 24) définies dans ledit corps de part et d'autre dudit piston et une tige de manœuvre (30) de cette valve, logée dans un alésage axial de ladite tige de vérin et faisant saillie à l'extrémité de celle-ci, caractérisé en ce que ladite tige de vérin est fixée à un équipage mobile (15) monté à l'intérieur d'un corps creux (13) abritant des moyens élastiques (14) couplés audit équipage mobile, en ce que ledit équipage mobile coopère avec des moyens de butée (35) limitant sa course axiale à l'intérieur dudit corps creux et en ce que l'extrémité (30a) de ladite tige de manœuvre débouche dans une cavité (37) dudit équipage mobile dans laquelle est agencée une butée (35a) fixe en translation par rapport audit corps creux, éventuellement réglable et/ou effaçable, placée en regard de ladite extrémité (30a) de tige de manœuvre (30).

2. Dispositif selon la revendication 1, caractérisé en ce que les moyens de butée précités comportent une tige transversale (35a) montée dans ledit corps creux et traversant un trou oblong (37) pratiqué dans ledit équipage mobile, les formes et dimensions de ladite tige transversale et dudit trou oblong définissant la course axiale précitée dudit équipage mobile.

3. Dispositif selon la revendication 2, caractérisé en ce que ledit trou oblong constitue aussi la cavité précitée dans laquelle débouche ladite tige de manœuvre et que ladite tige transversale (35a) constitue aussi la butée fixe précitée placée en regard de l'extrémité (30a) de la tige de manœuvre.

4. Dispositif selon la revendication 3, caractérisé en ce que ladite tige transversale cylindrique, est montée tourillonnante dans ledit corps creux, en ce qu'elle comporte un prolongement de manœuvre (41) extérieur audit corps creux et en ce qu'elle est munie d'une creusure latérale (43) située dans ladite cavité (37) et dont la profondeur est suffisante pour désolidariser ladite tige de manœuvre (30) de ladite tige transversale (35a), pour toute position dudit équipage mobile, lorsque ladite tige transversale est dans une position telle que ladite creusure se trouve placée en regard de ladite extrémité de tige de manœuvre.

5. Dispositif selon l'une des revendications précédentes, caractérisé en ce que ledit corps creux abrite un ressort hélicoïdal (14) monté en appui contre une extrémité axiale dudit équipage mobile (15) et constituant, au moins en partie, les moyens élastiques de compression précités.

6. Dispositif selon l'une des revendications précédentes, caractérisé en ce que ledit équipage mobile définit un piston monté à coulissement étanche dans ledit corps creux et en ce que le gaz emprisonné dans ledit corps entre les parois internes de celui-ci et ledit équipage mobile constitue, au moins en partie, les moyens élastiques de compression précités.

## Patentansprüche

1. Elastische, blockierbare Vorrichtung, die einen Arm mit veränderbarer Länge bildet, der dazu bestimmt ist, zwischen zwei Verankerungspunkten (18, 19) mit veränderbarem Abstand eines Mechanismus angebracht zu werden, wie z.B. ein Sitzmechanismus von der Art, die eine pneumatische (12) oder hydropneumatische Feder, welche mit einem Kolben (22) ausgerüstet ist, der im Inneren eines Arbeitszylinderkörpers (20) bewegbar und mit einer Stange (21) des genannten Arbeitszylinders verbunden ist, die axial von dem genannten Arbeitszylinderkörper vorsteht, ein in dem genannten Kolben angeordnetes Ventil (25), um die Verbindung zwischen zwei in dem genannten Körper beidseitig des genannten Kolbens begrenzten Kammern (23, 24) herzustellen, und für dieses Ventil eine Betätigungsstange (30) umfaßt, die von einer axialen Bohrung in der genannten Stange des Arbeitskörpers aufgenommen ist und an ihrem Ende hervorsteht, dadurch gekennzeichnet, daß die genannte Stange des Arbeitszylinders an einem bewegbaren Organ (15) befestigt ist, welches im Inneren eines Hohlkörpers (13) angeordnet ist, welcher mit dem genanntem bewegbaren Organ gekoppelte, elastische Mittel (24) schützt, daß das genannte bewegbare Organ mit Anschlagmitteln (35) zusammenarbeitet, die dessen axiale Wegstrecke im Inneren des genannten Hohlkörpers begrenzen, und daß das Ende (30a) der genannten Betätigungsstange in einen Hohlraum (37) des genannten bewegbaren Organs mündet, in dem ein in bezug auf den genannten Hohlkörper fester in translation, gegebenenfalls einstellbarer und/oder aufhebbarer Anschlag (35a) angeordnet ist, der dem genannten Ende (30a) der Betätigungsstange (30) gegenüberliegend angeordnet ist.

2. Vorrichtung nach Anspruch 1, dadurch gekennzeichnet, daß die vorgenannten Anschlagmittel eine Querstange (35a), umfassen, die in dem genannten Hohlkörper angebracht ist und ein in dem genannten bewegbaren Organ ausgebildetes, längliches Loch (37) durchquert, wobei die Formen und Abmessungen der genannten Querstange und des genannten länglichen Lochs die vorgenannte axiale Bewegungsstrecke des genannten bewegbaren Organs festlegen.

3. Vorrichtung nach Anspruch 2, dadurch gekennzeichnet, daß das genannte längliche Loch auch den vorgenannten Hohlraum bildet, in den die genannte Betätigungsstange mündet, und daß die genannte Querstange (35a) auch den festen, vorgenannten Anschlag bildet, der dem Ende (30a) der Betätigungsstange gegenüberliegend angeordnet ist.

4. Vorrichtung nach Anspruch 3, dadurch gekennzeichnet, daß die genannte zylindrische Querstange in dem genannten Hohlkörper verdrehbar angebracht ist, daß sie außerhalb des genannten Hohlkörpers eine Betätigungsverlängerung (41) aufweist und daß sie mit einer seitlichen Einsenkung (43) ausgebildet ist, die sich in dem genannten Hohlraum (37) befindet und deren Tiefe ausreichend ist, um die genannte Betätigungsstange (30) von der genannten Querstange (35a) bei jeder Lage des genannten bewegbaren Organs zu trennen, wenn sich die genannte Querstange in einer solchen Stellung befindet, daß sich die genannte Einsenkung in gegenüberliegender Anordnung des genannten Endes der Betätigungsstange befindet.

5. Vorrichtung nach einem der vorhergehenden Ansprüche, dadurch gekennzeichnet, daß der Hohlkörper eine Schraubenfeder (14) schützt, die an einem axialen Ende des genannten bewegbaren Organs (15) abstützend angeordnet ist und wenigstens zum Teil die vorgenannten elastischen Druckmittel bildet.

6. Vorrichtung nach einem der vorhergehenden Ansprüche, dadurch gekennzeichnet, daß das genannte bewegbare Organ einen Kolben festlegt, der dicht verschiebbar in dem genannten Hohlkörper angeordnet ist, und daß das in dem genannten Körper zwischen dessen Innenwandungen und dem genannten bewegbaren Organ eingeschlossene Gas wenigstens zum Teil die vorgenannten elastischen Druckmittel bildet.

## Claims

1. Resilient, lockable apparatus forming a variable length bracket which is intended to be mounted between two anchoring points (18, 19), with a variable spacing, of a mechanism such as, for example, a seating mechanism, of the type comprising a pneumatic spring (12) or hydro-pneumatic spring, which is provided with a piston (22), which is displaceable inside a jack body (20) and is connected to a shaft (21) of said jack, which shaft protrudes axially from said jack body, a valve (25) which is provided in said piston to establish communication between two chambers (23, 24) defined in said body on both sides of said piston, and an actuating stem (30) for actuating this valve, which stem is situated in an axial bore in said jack shaft and protrudes at the end of said shaft, characterised in that said jack shaft is secured to a displaceable assembly (15) mounted inside a hollow body (13) which accommodates resilient means (14) coupled to said displaceable assembly, in that said displaceable assembly co-operates with stop means (35) which define its axial path inside said hollow body, and in that the end (30a) of said actuating stem extends into a cavity (37) in said displaceable assembly, in which there is arranged a stop member (35a) fixed in translation relative to the said hollow body, optionally adjustable and/or retractable and is situated facing said end (30a) of actuating stem (30).

2. Apparatus according to claim 1, characterised in that the said stop means comprise a transverse rod (35a) which is mounted in said hollow body and transverses an oblong hole (37) formed in said displaceable assembly, the forms and dimensions of said transverse rod and of said oblong hole defining the said axial path of said displaceable assembly.

3. Apparatus according to claim 2, characterised in that said oblong hole also constitutes the cavity into which said actuating stem extends, and in that said transverse rod (35a) also constitutes the said stop member situated opposite the end (30a) of the actuating stem.

4. Apparatus according to claim 3, characterised in that said cylindrical, transverse rod is pivotally mounted in said hollow body, in that it comprises an actuating extension (41) externally of said hollow body, and in that it is provided with a lateral recess (43) which is situated in said cavity (37) and has a depth sufficient to disconnect said actuating stem (30) from said transverse rod (35a), for any position of said displaceable assembly, when said transverse rod is in such a position that said recess is situated opposite said actuating stem end.

5. Apparatus according to one of the preceding claims, characterised in that said hollow body accommodates a helical spring (14) mounted so as to be supported against an axial end of said displaceable assembly (15) and constituting, at least in part, the aforesaid resilient compression means.

6. Apparatus according to one of the preceding claims, characterised in that said displaceable assembly defines a piston slidingly mounted in a tight manner in said hollow body, and in that the gas trapped in said body between the internal walls of the latter and said displaceable assembly constitutes, at least in part, the aforesaid resilient compression means.

FIG.1

FIG.2

FIG.3

EP 0 236 234 B1